# EUROPÄISCHE PATENTSCHRIFT

(11) **EP 4 052 100 B1**
(45) Veröffentlichungstag und Bekanntmachung des Hinweises auf die Patenterteilung: **13.03.2024**
(21) Anmeldenummer: 20793417.5
(22) Anmeldetag: 27.10.2020
(51) Int. Cl.: G05B 19/042

(54) **SCHNITTSTELLENANORDNUNG ZUM VERBINDEN WENIGSTENS EINER STEUERUNGSEINRICHTUNG MIT MEHREREN FELDGERÄTEN**
INTERFACE ARRANGEMENT FOR CONNECTING AT LEAST ONE CONTROL DEVICE TO A PLURALITY OF FIELD INSTRUMENTS
AGENCEMENT D'INTERFACE POUR CONNECTER AU MOINS UN DISPOSITIF DE COMMANDE À UNE PLURALITÉ D'INSTRUMENTS DE TERRAIN

(30) Priorität: 29.10.2019 LU 101459; 19.12.2019 LU 101568
(43) Veröffentlichungstag der Anmeldung: 07.09.2022
(73) Patentinhaber: PHOENIX CONTACT GMBH & CO. KG, 32825 Blomberg (DE)
(72) Erfinder: KLIMMEK, Benjamin, 31855 Aerzen (DE); SCHULTE, Felix, 59590 Geseke (DE)
(74) Vertreter: Blumbach · Zinngrebe Patentanwälte PartG mbB
(86) Internationale Anmeldenummer: PCT/EP2020/080184
(87) Internationale Veröffentlichungsnummer: WO 2021/083896

(56) Entgegenhaltungen:
- EP-A1- 3 149 550
- US-A1- 2010 077 111
- US-B2- 10 360 125

## Beschreibung

Die Erfindung betrifft eine Schnittstellenanordnung zum Verbinden wenigstens einer Steuerungseinrichtung mit mehreren Feldgeräten, wobei die Schnittstellenanordnung insbesondere in prozesssteuernden Anlagen, wie zum Beispiel industriellen Automatisierungsanlagen zum Einsatz kommen kann.

In prozesssteuernden Automatisierungsanlagen werden Feldsignale von Feldgeräten über ein Stammkabel hin zu einem Kontrollraum geführt. Hier müssen die Signalleitungen des Stammkabels entsprechend ihrer Signalarten sortiert werden. Dies wird Rangierung (Marshalling) genannt. Neben der Sortierung der Signalarten muss gegebenenfalls noch durch ein entsprechendes Interface-Modul eine Signalumformung vorgenommen werden. Signalumformungen können beispielsweise mittels eines Relais durchgeführt werden, welche Spannungen auf der Feldebene von zum Beispiel 230V in Spannungspegel, mit denen Prozessleitsysteme arbeiten, von zum Beispiel 24V, umsetzt.

Aus der EP 3 149 550 A1 ist ein universelles E/A Interposersystem bekannt, welches E/A Signale, die zwischen einem E/A-Gerät und einem Controller übertragen werden, verarbeitet. Das bekannte Interposersystem weist eine Trägerplatte auf, auf der eine Anschlusseinrichtung zum Anschließen eines Feldgeräts und eine Anschlusseinrichtung zum Anschließen einer Steuerungseinrichtung angeordnet sind. Wie Figur 9 der EP 3 149 550 B1 zeigt, verläuft zwischen den beiden Anschlusseinrichtungen ein Signalkanal, der eine Verbindungseinrichtung auf der Trägerplatte aufweist, auf die wiederum eine Signalverarbeitungseinrichtung, beispielsweise ein Relais gesteckt werden kann. Weiterhin kann eine manuell betätigbare Sicherungseinrichtung zur gezielten Unterbrechung des Signalkanals in diesem angeordnet sein.

Die US 10,360,125 B2 offenbart Verfahren und Vorrichtungen zur kommunikativen Kopplung von Feldgeräten mit einem entfernten Endgerät. Die Beispielvorrichtung umfasst ein Grundgestell für ein entferntes Endgerät in einem

Prozesssteuerungssystem und ferner ein erstes Abschlussmodul, das in einen ersten Abschlussschlitz des Grundgestells eingesetzt wird. Drähte, die kommunikativ mit einem Feldgerät verbunden sind, müssen an dem ersten Abschlussmodul enden. Das Beispielgerät umfasst auch ein erstes Steuermodul, das von dem ersten Abschlussmodul getrennt ist und in einen ersten Steuerschlitz des Grundgestells eingesetzt wird. Das erste Steuermodul ist mit dem ersten Abschlussmodul über eine Rückwandplatine des Grundgestells kommunikativ gekoppelt. Das erste Steuermodul dient zur Steuerung der Kommunikation mit dem Feldgerät.

Die US-Anmeldung US 2010/0077111 A1 betrifft ebenfalls beispielhafte Vorrichtungen und Verfahren zur kommunikativen Kopplung von Feldgeräten mit Steuerungen in einem Prozesssteuerungssystem. Ein beispielhaftes Verfahren zum Ändern eines Kommunikationsprotokolls eines ersten Feldgeräts in einem Prozesssteuerungssystem umfasst das Entkoppeln eines ersten entfernbaren Kommunikationsmoduls von dem ersten Feldgerät, wobei das Kommunikationsmodul so konfiguriert ist, dass es unter Verwendung eines ersten Kommunikationsprotokolls kommuniziert. Ferner umfasst das beispielhafte Verfahren das Ankoppeln eines zweiten entfernbaren Kommunikationsmoduls an das erste Feldgerät, das so konfiguriert ist, dass es unter Verwendung eines zweiten Kommunikationsprotokolls kommuniziert. Nach dem Ankoppeln des zweiten entfernbaren Kommunikationsmoduls ist das erste Feldgerät so konfiguriert, dass es unter Verwendung des zweiten Kommunikationsprotokolls kommuniziert. Darüber hinaus ist das erste Feldgerät bei einer Kommunikation unter Verwendung des ersten Kommunikationsprotokolls mit einem ersten Kommunikationskanal auf einer Eingangs-/Ausgangskarte gekoppelt und bei einer Kommunikation unter Verwendung des zweiten Kommunikationsprotokolls mit dem ersten Kommunikationskanal auf der Eingangs-/Ausgangskarte gekoppelt.

Der Erfindung liegt die Aufgabe zugrunde, eine Schnittstellenanordnung zum Verbinden wenigstens einer Steuerungseinrichtung mit mehreren Feldgeräten vorzusehen, die flexibel und in kostengünstiger Weise mit Überspannungsschutzeinrichtungen oder auch ohne Überspannungsschutzeinrichtungen betrieben werden kann, wobei durch Überspannungen verursachte hohe Ströme über die Trägerplatte abgeleitet werden, ohne die über die Schnittstellenanordnung übertragenen Feldsignale zu beeinflussen.

Das oben genannte technische Problem wird durch die Merkmale des Anspruchs 1 gelöst.

Die Schnittstellenanordnung ist insbesondere zum Verbinden wenigstens einer Steuerungseinrichtung mit mehreren Feldgeräten ausgebildet. Feldgeräte können Sensoren und/oder Aktoren sein, während es sich bei der Steuerungseinrichtung beispielsweise um eine speicherprogrammierbare Steuerung (SPS) handeln kann.

Gemäß einem ersten Aspekt weist die Schnittstellenanordnung eine Trägerplatte mit mehreren Signalkanälen auf, die jeweils eine erste Anschlusseinrichtung und eine zweite Anschlusseinrichtung aufweisen, wobei die ersten Anschlusseinrichtungen jeweils zum Anschließen eines Feldgeräts und die zweiten Anschlusseinrichtungen zum Anschließen wenigstens einer Steuerungseinrichtung ausgebildet sind. Zwischen der ersten und zweiten Anschlusseinrichtung jedes Signalkanals ist ein erster Verbinder angeordnet, der jeweils zum elektrischen und mechanischen Verbinden mit einem zweiten, komplementär ausgebildeten Verbinder einer Signalverarbeitungseinrichtung ausgebildet ist. Bei der Signalverarbeitungseinrichtung kann es sich beispielsweise um einen Signalumformer handeln, der Spannungen auf der Feldebene in einen definierten Spannungspegel, mit denen Prozessleitsysteme arbeiten, umsetzen kann. Weiterhin weist jeder Signalkanal eine elektrische Schnittstelle auf, die zum lösbaren, vorzugsweise steckbaren Anschließen jeweils eines Überspannungsschutzmoduls ausgebildet und an der Trägerplatte zwischen dem jeweiligen ersten Verbinder und der jeweiligen ersten Anschlusseinrichtung angeordnet ist. Beispielsweise kann jede Schnittstelle hierzu wenigstens zwei Anschlusskontakte aufweisen, an die ein elektrischer Widerstand anschließbar ist. Jede Schnittstelle ist mit einem elektrischen Widerstand verbunden. Weiterhin ist eine Überspannung-Ableitungseinrichtung mit den Schnittstellen elektrisch verbunden, wobei die Überspannung-Ableitungseinrichtung zumindest teilweise an und/oder in der Trägerplatte angeordnet und zum Ableiten auftretender Überspannungen und/oder Überströme vorzugsweise nur über die Trägerplatte ausgebildet ist.

Um eine raumsparende und effiziente Anordnung auf der Trägerplatte zu erzielen, sind die Signalkanäle parallel zueinander angeordnet. Weiterhin weist jeder Signalkanal wenigstens einen ersten Signalleitungsabschnitt auf, der sich von der ersten Anschlusseinrichtung des jeweiligen Signalkanals zum ersten Verbinder erstreckt und in den der elektrische Widerstand des jeweiligen Signalkanals geschaltet ist. Jeder Signalkanal weist wenigstens einen zweiten Signalleitungsabschnitt auf, der die zweiten Anschlusseinrichtungen des jeweiligen Signalkanals mittelbar oder unmittelbar mit dem jeweiligen ersten Verbinder elektrisch verbindet. Eine kompakte Anordnung ergibt sich dadurch, dass die ersten Verbinder nebeneinander an der Trägerplatte angeordnet sind. Die Überspannung-Ableitungseinrichtung weist einen elektrischen Leiter auf, der rechtwinklig zu den ersten Signalleitungsabschnitten verläuft. Hierdurch wird verhindert, dass Signale, die über die Signalkanäle übertragen werden, durch entstehende Überströme beeinflusst werden.

Um sicherzustellen, dass Überströme bzw. Überspannungen nur über die Trägerplatte und nicht durch auf der Trägerplatte angeordnete Bauteile, wie zum Beispiel Signalverarbeitungseinrichtungen, abgeführt werden, kann an der Trägerplatte ein Masseanschluss angeordnet sein, der mit dem elektrischen Leiter der Überspannung-Ableitungseinrichtung verbunden ist.

Wie bereits erwähnt, kann gemäß einer vorteilhaften Ausgestaltung in jedem ersten Verbinder eine erste Signalverarbeitungseinrichtung eingesteckt sein, die wenigstens eine vorgegebene Funktion ausführen können.

Angemerkt sei, dass in jedem Signalkanal wenigstens ein weiterer Verbinder zum Verbinden mit einer weiteren Signalverarbeitungseinrichtung vorgesehen sein kann, wobei die weiteren Signalverarbeitungseinrichtungen andere vorgegebene Funktionen als die ersten Signalverarbeitungseinrichtungen ausführen können. Auf diese Weise können Schnittstellenanordnungen mit den unterschiedlichsten Funktionen aufgebaut werden.

Das oben genannte technische Problem wird ebenfalls mit den Merkmalen des Anspruchs 4 gelöst.

Danach ist eine Schnittstellenanordnung zum Verbinden wenigstens einer Steuerungseinrichtung mit mehreren Feldgeräten vorgesehen, die wenigstens eine erste Trägerplatte mit mehreren ersten Signalkanälen aufweist, die jeweils eine erste Anschlusseinrichtung und eine zweite Anschlusseinrichtung aufweisen, wobei die ersten Anschlusseinrichtungen jeweils zum Anschließen eines Feldgeräts und die zweiten Anschlusseinrichtung zum elektrischen Verbinden mit dritten Anschlusseinrichtung einer zweiten Trägerplatte ausgebildet sind. Jeder erste Signalkanal weist eine elektrische Schnittstelle auf, die zum lösbaren Anschließen jeweils eines Überspannungsschutzmodus ausgebildet und zwischen der ersten und zweiten Anschlusseinrichtung des jeweiligen Signalkanals angeordnet ist. Hierzu kann jede Schnittstelle wenigstens zwei Anschlusskontakte aufweisen, an welche beispielsweise ein elektrischer Widerstand anschließbar ist. Jede Schnittstelle ist mit einem elektrischen Widerstand verbunden. Weiterhin ist eine mit den Schnittstellen elektrisch verbunden Überspannung-Ableitungseinrichtung vorgesehen, die zu mindestens teilweise an und/oder in der wenigstens einen ersten Trägerplatte angeordnet und zum Ableiten auftretender Überspannungen und/oder Überströme vorzugsweise nur über die Trägerplatte ausgebildet ist. Die Schnittstellenanordnung weist eine zweite Trägerplatte mit mehreren zweiten Signalkanälen auf, die jeweils eine dritte Anschlusseinrichtung und eine vierte Anschlusseinrichtung aufweisen. Die vierten Anschlusseinrichtungen sind zum Anschließen wenigstens eine Steuerungseinrichtung ausgebildet, während zu mindestens einige der dritten Anschlusseinrichtungen zum elektrischen Verbinden mit der zweiten Anschlusseinrichtung der wenigstens einen ersten Trägerplatte ausgebildet sind. Wenn die wenigstens eine erste Trägerplatte und die zweite Trägerplatte miteinander gekoppelt sind, besteht eine elektrische Verbindung zwischen den zweiten Anschlusseinrichtungen und den dritten Anschlusseinrichtungen. Zwischen der dritten und vierten Anschlusseinrichtung jedes zweiten Signalkanals ist ein erster Verbinder angeordnet, wobei die ersten Verbinder jeweils zum elektrischen und mechanischen Verbinden mit einem zweiten, komplementär ausgebildeten Verbinder einer Signalverarbeitungseinrichtung ausgebildet sind.

Eine kompakte und platzsparende Schnittstellenanordnung ergibt sich beispielsweise dadurch, dass die ersten Signalkanäle der wenigstens einen ersten Trägerplatte parallel zueinander angeordnet sind, dass jeder erste Signalkanal wenigstens einen ersten Signalleitungsabschnitt aufweist, der sich von der ersten Anschlusseinrichtung des jeweiligen ersten Signalkanals zur zweiten Anschlusseinrichtung erstreckt und in den der elektrische Widerstand des jeweiligen Signalkanals geschaltet ist. Zudem weist die Überspannung-Ableitungseinrichtung einen elektrischen Leiter auf, der rechtwinklig zu den ersten Signalleitungsabschnitten verläuft, um Signalbeeinflussungen auf den Signalkanälen infolge von Überspannung oder Überströme zu verhindern.

Um sicherzustellen, dass Überströme bzw. Überspannungen nur über die erste Trägerplatte und nicht durch auf der ersten und/oder zweiten Trägerplatte angeordnete Bauteile, wie zum Beispiel Signalverarbeitungseinrichtungen, abgeführt werden, kann zweckmäßigerweise an der wenigstens einen ersten Trägerplatte ein Massenanschluss angeordnet sein, der mit dem elektrischen Leiter verbunden ist.

Die Schnittstellenanordnung ist flexibel einsetzbar. Vorteilhafterweise kann hierzu eine weitere erste Trägerplatte mit mehreren dritten Signalkanäle vorgesehen sein, die jeweils eine fünfte Anschlusseinrichtung und eine sechste Anschlusseinrichtung aufweisen. Die fünften Anschlusseinrichtungen sind jeweils zum Anschließen eines Feldgerätes ausgebildet, während die sechsten Anschlusseinrichtungen zum elektrischen Verbinden mit den verbleibenden dritten Anschlusseinrichtungen der zweiten Trägerplatte ausgebildet sein können. Jeder dritte Signalkanal weist eine elektrische Schnittstelle auf, die zum lösbaren Anschließen, vorzugsweise zum Stecken jeweils eines Überspannungsmoduls, ausgebildet und zwischen der fünften und sechsten Anschlusseinrichtung des jeweiligen dritten Signalkanals angeordnet ist. Jede Schnittstelle ist mit einem elektrischen Widerstand verbunden. Weiterhin ist eine mit den Schnittstellen elektrisch verbundene Überspannung-Ableitungseinrichtung vorgesehen, die zumindest teilweise an und/oder in der weiteren ersten Trägerplatte angeordnet und zum Ableiten auftretender Überspannung und/oder Überströme vorzugsweise nur über die wenigstens eine weitere erste Trägerplatte ausgebildet ist.

Die zuvor umschriebenen Schnittstellenanordnungen können jeweils zur Montage an einer Tragschiene ausgebildet sein.

Die Überspannungsschutzmodule können als Steckmodule ausgebildet sein, wobei hierzu dann die Schnittstellen zur Aufnahme von solchen Steckmodulen ausgebildet sind.

Wie bereits erwähnt, kann gemäß einer vorteilhaften Ausgestaltung in jedem ersten Verbinder eine erste Signalverarbeitungseinrichtung eingesteckt sein, die wenigstens eine vorgegebene Funktion ausführen können.

Angemerkt sei, dass in jedem zweiten Signalkanal wenigstens ein weiterer Verbinder zum Verbinden mit einer weiteren Signalverarbeitungseinrichtung vorgesehen sein, wobei die weiteren Signalverarbeitungseinrichtungen andere vorgegebene Funktionen als ersten Signalverarbeitungseinrichtungen ausführen können. Auf diese Weise können Schnittstellenanordnungen mit den unterschiedlichsten Funktionen aufgebaut werden.

Die Erfindung wird nachfolgend anhand von zwei Ausführungsbeispielen in Verbindung mit den beiliegenden Zeichnungen näher erläutert. Es zeigen:
- Figur 1: die Draufsicht auf eine beispielhafte Schnittstellenanordnung gemäß der Erfindung,
- Figur 2: eine Ansicht im Querschnitt entlang des ersten Signalkanals der in Figur 1 gezeigten Schnittstellenanordnung,
- Figur 3: eine Draufsicht auf eine alternative beispielhafte Schnittstellenanordnung gemäß der Erfindung, und
- Figur 4: eine Ansicht im Querschnitt entlang des ersten Signalkanals der in Figur 3 gezeigten Schnittstellenanordnung.

Vorab sei angemerkt, dass der in den Bezugszeichen verwendete Index n zum Beispiel gleich 16 sein kann.

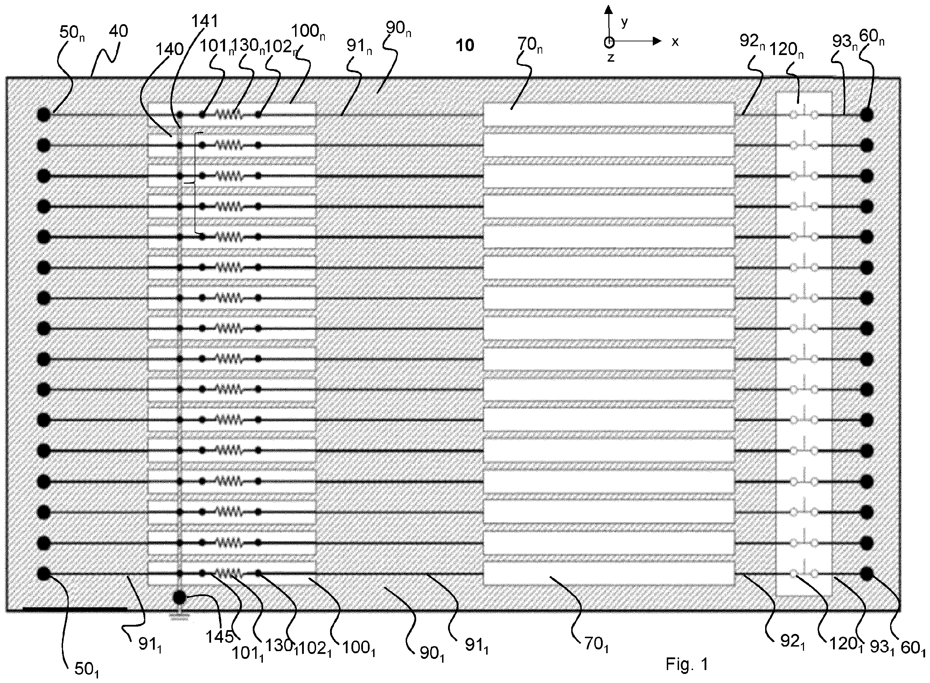

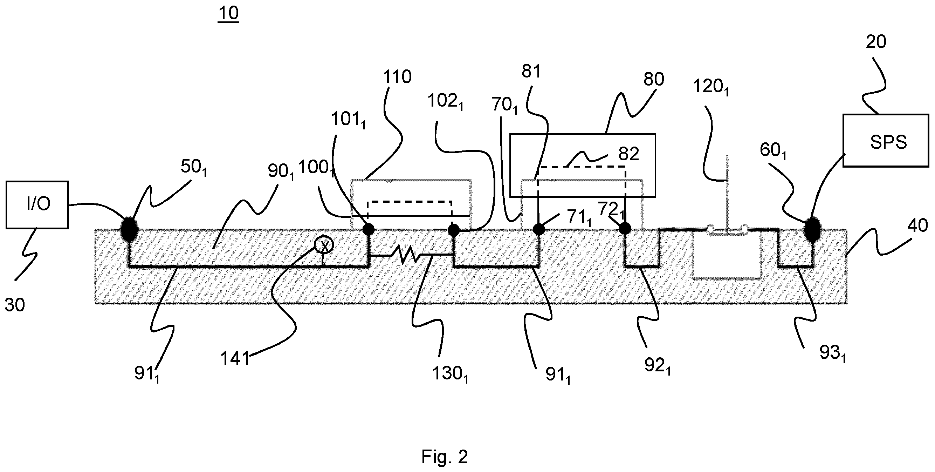

In Figur 1 ist eine beispielhafte Schnittstellenanordnung 10 dargestellt, die dazu ausgebildet ist, mehrere Feldgeräte mit wenigstens einer Steuerungseinrichtung zu verbinden, wobei Signale von und zu den Feldgeräten je nach Implementierung umsortiert, verarbeitet und/oder umgewandelt werden. Bei den Feldgeräten kann es sich um Sensoren und/oder Aktoren handeln. Die beispielhafte Schnittstellenanordnung 10 weist eine Trägerplatte 40 mit mehreren Signalkanälen 90₁ bis 90, auf. Vorzugsweise in der Nähe des linken Randes der Trägerplatte 40 sind mehrere erste Anschlusseinrichtungen 50₁ bis 50ₙ angeordnet. Die ersten Anschlusseinrichtungen 50₁ bis 50ₙ sind vorzugsweise auf einer gedachten Linie angeordnet, die parallel zur Y-Achse des in Figur 1 gezeigten Koordinatensystems und somit senkrecht zur Längsachse der Trägerplatte 40 verläuft. An jede erste Anschlusseinrichtung kann ein Feldgerät angeschlossen werden. Ein solches Feldgerät 30 ist bespielhaft in Figur 2 gezeigt.

Die Signalkanäle 90₁ bis 90ₙ verlaufen vorzugsweise parallel zueinander und zwar auf gedachten Linien, die jeweils parallel zur x-Achse des in Figur 1 gezeigten Koordinatensystems und somit parallel zur Längsachse der Trägerplatte 40 verlaufen. Da die Signalkanäle beim vorliegenden Beispiel im Wesentlichen identisch zueinander ausgebildet sind, wird deren Aufbau der Einfachheit halber lediglich in Verbindung mit dem Signalkanal 91₁ näher beschrieben. Die Erläuterung des Signalkanals 90₁ erfolgt von links nach rechts bezüglich der in Fig. 1 gezeigten Schnittstellenanordnung 10.

Der Signalkanal 90₁ weist die erste Anschlusseinrichtung 50₁ auf, die vorzugsweise über einen ersten Signalleitungsabschnitt 91₁ mit einem ersten elektrischen Verbinder 70, verbunden ist. Der erste Verbinder 70₁ kann als Buchse oder Stecker einer Steckverbindung ausgebildet sein. Zwischen der ersten Anschlusseinrichtung 50₁ und dem ersten Verbinder 70₁ ist eine Schnittstelle 100₁ an der Trägerplatte 40 montiert. Die elektrische Schnittstelle 100₁ ist dazu ausgebildet, ein Überspannungsschutzmodul lösbar aufzunehmen. Vorzugsweise ist das Überspannungsschutzmodul als Steckmodul ausgebildet, sodass die Schnittstelle entsprechende mechanische Ausgestaltung hat, um Steckmodule aufnehmen zu können. Die elektrische Schnittstelle 100₁ enthält wenigstens zwei elektrische Kontakte 101₁ und 102₁, die mit entsprechenden Kontakten des Überspannungsschutzmoduls verbunden werden können.

Damit die Schnittstellenanordnung 10 auch ohne gesteckte Überspannungsschutzschutzmodule ordnungsgemäß betrieben werden kann, ist in den ersten Signalleitungsabschnitt 91₁ bzw. an den Kontakten 101₁ und 102, der Schnittstelle 100, ein elektrischer Widerstand 130₁ geschaltet. Der elektrische Widerstand 130₁ sorgt dafür, dass ein durch bei Überspannungen hervorgerufene erhöhte Strom über die Schnittstelle 100₁ durch das gesteckte Überspannungsmodul fließt. Das jeweilige Überspannungsmodul ist derart ausgebildet, dass es bei hohen Spannungen niederohmig wird, sodass der Strom nicht mehr bzw. nur zu einem unschädlichen Teil durch den Widerstand 130, fließt. Damit die bei Überspannung auftretenden hohen Ströme nicht durch die Signalverarbeitungseinrichtungen fließen, ist eine Überspannung-Ableitungseinrichtung 140 vorgesehen, die einen elektrischen Leiter 141 aufweist, der mit jeder Schnittstelle 100₁ bis 100ₙ bzw. mit den jeweiligen ersten Signalleitungsabschnitten 91₁ bis 91ₙ elektrisch verbunden ist. Der elektrische Leiter 141 ist vorzugsweise mit einem Masseanschluss 145, der vorzugsweise an der Trägerplatte 40 angeordnet ist, verbunden. Der Masseanschluss 145 kann, wie in der Figur 1 dargestellt, mit Erde oder einer Tragschiene (nicht dargestellt), auf die die Schnittstellenanordnung 10 aufrastbar ist, verbunden werden.

Wie in Figur 1 weiter zu sehen, ist der erste Signalleitungsabschnitt 91₁ des Signalkanals 90₁ mit dem Verbinder 70₁ verbunden. Der Verbinder 70₁ ist im dargestellten Beispiel mittelbar über einen zweiten Signalleitungsabschnitt 92₁, eine manuell betätigbare Sicherungseinrichtung 120₁ und einen dritten Signalleitungsabschnitt 93₁ mit der zweiten Anschlusseinrichtung 60₁ verbunden.

Die zweiten Anschlusseinrichtungen 60₁ bis 60ₙ befinden sich vorzugsweise in der Nähe des rechten Randes der Trägerplatte 40 und sind auf einer gedachten Linie angeordnet, die parallel zur y-Achse des in Figur 1 gezeigten Koordinatensystems verläuft. Denkbar ist auch, den Verbinder 70, direkt über den zweiten Signalleitungsabschnitt 92, mit der zweiten Anschlusseinrichtung 60₁ zu verbinden. Ein Vorteil der manuell betätigbaren Sicherungseinrichtung 120₁ ist darin zu sehen, dass der jeweilige Signalkanal, hier der Signalkanal 90₁ im Notfall direkt von einer Bedienperson unterbrochen werden kann.

Wie in Figur 1 zu sehen, weist die Schnittstellenanordnung 10 beispielsweise n=16 Signalkanäle 90₁ bis 90ₙ, 16 erste Anschlusseinrichtungen 50₁ bis 50ₙ, 16 Schnittstellen 100, bis 100ₙ, 16 Verbinder 70₁ bis 70ₙ und entsprechend 16 zweite Anschlusseinrichtungen 60₁ bis 60ₙ auf, die jeweils auf einer gedachten Linie, die parallel zur y-Achse des in Figur 1 gezeigten Koordinatensystems verlaufen, angeordnet sind. Alle Signalkanäle bzw. zweiten Anschlusseinrichtungen 60₁ bis 60ₙ sind dazu ausgebildet, mit einer Steuerungseinrichtung, beispielsweise der in Figur 2 gezeigten speicherprogrammierbaren Steuerung 20 verbunden zu werden.

In Figur 2 ist eine Ansicht im Querschnitt durch die Schnittstellenanordnung 10, die in Figur 1 dargestellt ist, und zwar entlang des ersten Signalkanals 90₁ dargestellt.

Zu sehen ist in Figur 2 ein Querschnitt durch die Trägerplatte 40 und ein an den ersten Anschluss 50₁ angeschlossenes Feldgerät 30, welches ein Sensor oder ein Aktor sein kann. Wie in Figur 2 beispielhaft dargestellt, verläuft der erste Signalleitungsabschnitt 91₁ des Signalkanals 90₁ innerhalb der Trägerplatte 40 bis zum ersten elektrischen Kontakt 101₁ der Schnittstelle 100₁, weiter über den elektrischen Widerstand 130₁, den zweiten elektrischen Kontakt 102₁ der Schnittstelle 100, bis zu einer ersten Kontaktstelle 71₁ des ersten Verbinder 70₁. Weiterhin ist in Figur 2 zu sehen, dass ein Überspannungsschutzmodul 110 in der Schnittstelle 100₁ gesteckt ist. Wie bereits erwähnt, dient das Überspannungsschutzmodul 100₁ dazu, im Überspannungsfall einen hohen Strom über das Überspannungsschutzmodul 110 im Widerstand 130₁ zu führen.

Weiterhin ist in Figur 2 eine Signalverarbeitungseinrichtung 80 zu sehen, die mit dem ersten Verbinder 70₁ elektrisch und mechanisch verbunden ist. Hierzu weist die Signalverarbeitungseinrichtung 80 einen komplementär zum ersten Verbinder 70₁ ausgebildeten Verbinder 81 auf.

Der zweite Signalleitungsabschnitt 92₁ verläuft von einer zweiten Kontaktstelle 72₁ des ersten Verbinders 70₁ beispielsweise teilweise im und auf dem Träger 40 bis hin zu der manuell betätigbaren Sicherungseinrichtung 120₁. Wie aus Figur 2 ersichtlich wird, sind die beiden Signalleitungsabschnitte 91₁ und 92₁ elektrisch nur dann miteinander verbunden, wenn die Signalverarbeitungseinrichtung 80 mit dem ersten Verbinder 70₁ verbunden ist. Eine elektrische Verbindung des Signalkanals 90₁ wird somit erst hergestellt, wenn die Signalverarbeitungseinrichtung 80 mit dem ersten Verbinder 70₁ elektrisch verbunden ist. Ein vom als Sensor fungierenden Feldgerät 30 kann dann über den Signalleitungsabschnitt 91₁, den elektrischen Widerstand 130, der Signalverarbeitungseinrichtung 80 zugeführt, von dieser entsprechend verarbeitet und dann weiter über den zweiten Signalleitungsabschnitt 92₁, die manuell betätigbare Sicherungseinrichtung 120₁, über den dritten Signalleitungsabschnitt 93₁ und über die zweite Anschlusseinrichtung 60₁ der SPS 20 zur weiteren Verarbeitung zugeführt. Die Schnittstellenanordnung 10 sorgt dafür, dass die an die ersten Anschlusseinrichtungen 50₁ bis 50ₙ angeschlossenen Feldgeräte korrekt den entsprechenden Ein- oder Ausgängen der Steuerungseinrichtung 20 zugeordnet werden können. Je nach Implementierung können beispielsweise über den Signalkanal 90₁ analoge Eingangssignale des Sensors 30 der Signalverarbeitungseinrichtung 80 zugeführt, dort in digitale Signale umgewandelt und über die Anschlusseinrichtung 60₁ einem digitalen Eingang der Steuerungseinrichtung 20 zugeführt werden. In ähnlicher Weise können je nach Implementierung beispielsweise über den Signalkanal 90ₙ analoge Ausgangssignale der Steuerungseinrichtung 20 über die zweite Anschlusseinrichtung 60ₙ, eine Signalverarbeitungseinrichtung, die elektrisch mit dem Verbinder 70ₙ verbunden ist, und über die erste Anschlusseinrichtung 50ₙ einem nicht dargestellten, einen analogen Eingang aufweisenden Aktor zugeführt werden.

Angemerkt sei noch, dass die Schnittstellen 100₁ bis 100ₙ jeweils als elektrische Steck- oder Buchsenverbinder ausgebildet sein können.

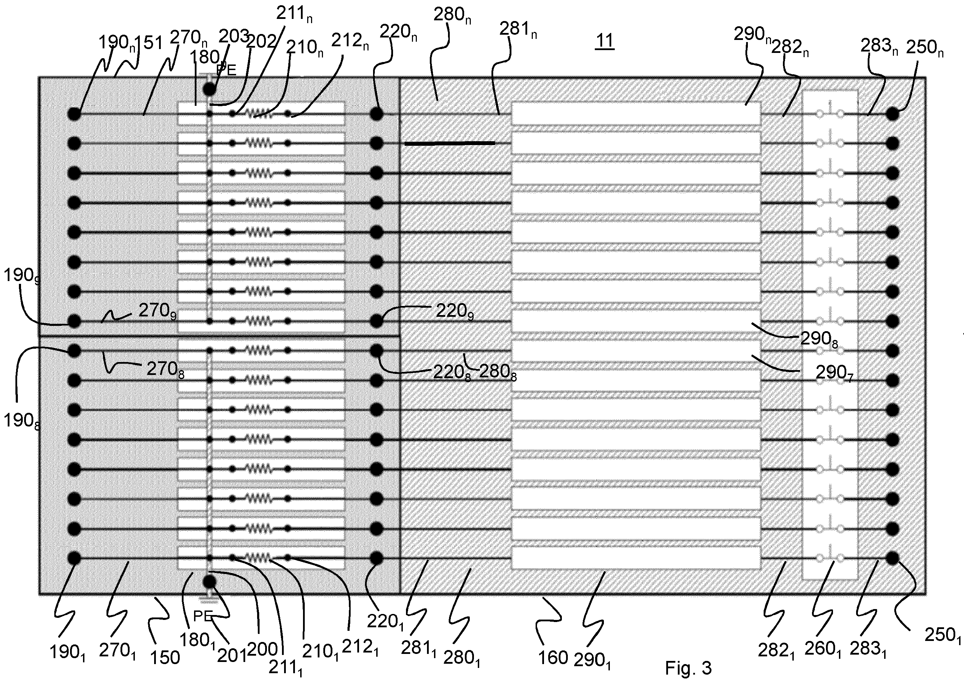

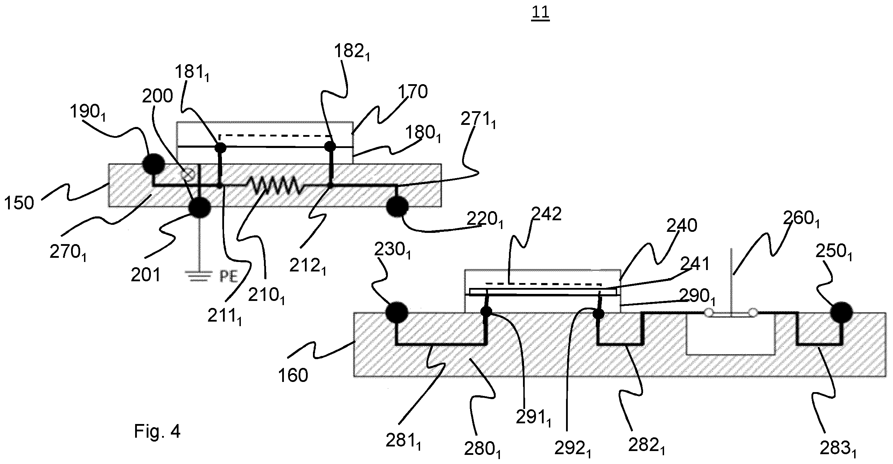

In den Figuren 3 und 4 ist eine alternative Schnittstellenanordnung 11 dargestellt, die dazu ausgebildet ist, mehrere Feldgeräte mit wenigstens einer Steuerungseinrichtung zu verbinden, wobei Signale von und zu den Feldgeräten je nach Implementierung umsortiert, verarbeitet und/oder umgewandelt werden.

Ein Unterschied zur Schnittstellenanordnung 10 besteht darin, dass die Schnittstellenanordnung 11 mehrere Trägerplatten aufweist, die einen flexibleren Aufbau und somit und eine leichtere Anpassung an unterschiedliche Einsatzgebiete und Anwendungsfälle ermöglichen. Hierzu sind Schnittstellen 180₁ bis 180ₙ zum Anschließen von Überspannungsschutzmodulen an wenigstens einer ersten Trägerplatte 150 und elektrische Verbinder 290₁ bis 290ₙ zum Anschließen von Signalverarbeitungseinrichtungen an einer zweiten Trägerplatte 160 angeordnet. Zunächst wird Figur 3 betrachtet.

Figur 3 zeigt eine Draufsicht auf die alternative Schnittstellenanordnung 11 ohne Überspannungsschutzmodule und ohne aufgesteckte Signalverarbeitungseinrichtungen, die jedoch in Figur 4 dargestellt sind.

Die Schnittstellenanordnung 11 weist wenigstens die eine erste Trägerplatte 150 auf, die wiederum mehrere erste Signalkanäle, beispielsweise acht Signalkanäle 270₁ bis 270s, aufweist. Im vorliegenden Beispiel weist die Schnittstellenanordnung 11 zwei erste Trägerplatten, nämlich die Trägerplatte 150 und eine weitere Trägerplatte eine 151 auf, die wiederum mehrere Signalkanäle, beispielsweise ebenfalls acht Signalkanäle 270₉ bis 270ₙ aufweist. Somit verfügt die Schnittstellenanordnung 11 über 16 Signalkanäle.

Da die beiden Trägerplatten 150 und 151 im Wesentlichen gleich ausgebildet sein können, wird nachfolgend lediglich der Aufbau der Trägerplatte 150 näher erläutert.

Jeder der Signalkanäle 270₁ bis 270₈ weist vorzugsweise in der Nähe eines ersten Randes der Trägerplatte 150 eine erste Anschlusseinrichtung und am gegenüberliegenden Rand der Trägerplatte 150 eine zweite Anschlusseinrichtung auf. Mit anderen Worten: der Signalkanal 270₁ weist die erste Anschlusseinrichtung 190₁ und die zweite Anschlusseinrichtung 220₁ auf, während der achte Signalkanal 270s eine erste Anschlusseinrichtung 190₈ und eine zweite Anschlusseinrichtung 220s aufweist. Die ersten Anschlusseinrichtungen 190₁ bis 190s sind jeweils zum Anschließen eines Feldgerätes ausgebildet. Bei dem Feldgerät kann es sich um einen Aktor oder einen Sensor mit analogem oder digitalem Ausgang handeln. Die zweiten Anschlusseinrichtungen 220₁ bis 220₈ sind derart ausgebildet, dass sie mit dritten Anschlusseinrichtungen 230₁ bis 230s der zweiten Trägerplatte 160 elektrisch verbunden werden können. Bei der in Figur 3 beispielhaft gezeigten Schnittstellenanordnung 11 sind die dritten Anschlusseinrichtungen 230₁ bis 230ₙ durch die beiden Trägerplatten 150 und 151 verdeckt; sie sind allerdings in Figur 4 zu sehen. Bereits an dieser Stelle sei angemerkt, dass die beiden ersten Trägerplatten 150 und 151 und die Trägerplatte 160 alternativ jeweils an ihrer Stirnseite verbunden werden können, wobei dann die zweiten Anschlusseinrichtungen 220₁ bis 220ₙ beispielsweise am äußersten Rand oder an der Stirnseite der Trägerplatten 150 und 151 angeordnet sind, während die dritten Anschlusseinrichtungen 230₁ bis 230ₙ an der äußerst linken Seite der Trägerplatte 150 oder an deren Stirnseite angeordnet sein können.

Jeder der Signalkanäle 270₁ bis 270ₙ weist eine elektrische Schnittstelle 180₁ bis 180ₙ auf, wobei jede elektrische Schnittstelle zum lösbaren Anschließen jeweils eines Überspannungsmoduls ausgebildet ist. Die Schnittstellen 180₁ bis 180s können wiederum jeweils als Steck- oder Buchsenverbinder ausgebildet ein.

Die elektrischen Schnittstellen 180₁ bis 180₈ sind zwischen der ersten Anschlusseinrichtung und der zweiten Anschlusseinrichtung des jeweiligen Signalkanals angeordnet. So ist beispielsweise die elektrische Schnittstelle 180₁ zwischen der ersten Anschlusseinrichtung 190₁ und der zweiten Anschlusseinrichtung 220₁ angeordnet. Jede elektrische Schnittstelle ist mit einem elektrischen Widerstand verbunden. So ist die elektrische Schnittstelle 180₁ mit einem elektrischen Widerstand 210₁ verbunden, während die elektrische Schnittstelle 180₈ mit einem elektrischen Widerstand 110s verbunden ist. Ferner weist die erste Trägerplatte 150 eine Überspannung-Ableitungseinrichtung 200 auf, die zumindest teilweise an und/oder in der ersten Trägerblatt 150 angeordnet und zum ableiten auftretender Überspannungen und/oder Überströme ausgebildet ist. In ähnlicher Weise weist die weitere erste Trägerblatt 151 eine Überspannung-Ableitungseinrichtung 202 auf, die elektrisch mit den Schnittstellen 270₉ bis 270ₙ verbunden ist.

Bei einer beispielhaften Ausgestaltung weist jeder erste Signalkanal 270₁ bis 270₈ der Trägerplatte 150 wenigstens einen ersten Signalleitungsabschnitt 271₁ bis 271s auf, der sich von der ersten Anschlusseinrichtung des jeweiligen ersten Signalkanals zur zweiten Anschlusseinrichtung erstreckt. Mit anderen Worten: der Signalleitungsabschnitt 271₁ des ersten Signalkanals 270₁ erstreckt sich von der ersten Anschlusseinrichtung 190₁ bis zur zweiten Anschlusseinrichtung 220₁.

Wie in Figur 3 zu sehen, sind die elektrischen Widerstände 210₁ bis 210₈ in den jeweiligen Signalleitungsabschnitt 271₁ bzw. 271s geschaltet bzw. jeweils mit zwei elektrischen Kontakten 211₁-211₈ und 212₁-212₈ der jeweiligen Schnittstelle 180₁-180₈ verbunden. Weiterhin ist in Figur 3 beispielhaft gezeigt, dass die Überspannung-Ableitungseinrichtung 200 einen elektrischen Leiter aufweist, der rechtwinklig zu den ersten Signalleitungsabschnitten 271₁ bis 271₈ verläuft. Mit anderen Worten: der elektrische Leiter der Überspannungs-Ableitungseinrichtung 200 ist an einer gedachten Linie ausgerichtet, die parallel zur y-Achse angeordnet ist, während die Signalleitungsabschnitte 271₁ bis 271s parallel zur x-Achse des in Figur 3 gezeigten Koordinatensystems verlaufen. An der ersten Trägerplatte 150 kann ein Massenanschluss 201 angeordnet sein, der mit dem elektrischen Leiter der Überspannung-Ableitungseinrichtung 200 verbunden ist. In ähnlicher Weise kann an der weiteren ersten Trägerplatte 151 ein weiterer Massenanschluss 203 angeordnet sein, der mit dem elektrischen Leiter einer Überspannung-Ableitungseinrichtung 202 elektrisch verbunden ist.

Die Trägerplatte 151 weist die übrigen Signalkanäle 270₉ bis 270ₙ auf, die wie zuvor erwähnt, im Wesentlichen identisch zu den Signalkanälen 270₁ bis 270₈ aufgebaut sein kann, die zuvor beschrieben worden sind. Wie Figur 3 zeigt, sind insbesondere die ersten Anschlusseinrichtungen 190₁ bis 190ₙ, die Schnittstellen 180₁ bis 180ₙ und die zweiten Anschlusseirichtungen 220₁ bis 220ₙ jeweils auf einer gedachten Linie angeordnet, die parallel zur y-Achse des in Figur 3 gezeigten Koordinatensystems verlaufen.

Angemerkt sei an dieser Stelle, dass die beiden ersten Trägerplatten 150 und 151 sowie die zweite Trägerplatte 160 dazu ausgebildet sein können, elektrisch und mechanisch miteinander gekoppelt werden zu können. Hierzu können die Trägerplatten entsprechende Rastelemente aufweisen, die eine mechanische Fixierung und Halterung der Trägerplatten miteinander ermöglichen.

Die zweite Trägerplatte 160 weist mehrere zweite Signalkanäle 280₁ bis 280ₙ auf, die wiederum jeweils eine der dritten Anschlusseinrichtungen und jeweils eine vierte Anschlusseinrichtung aufweisen und im gekoppelten Zustand zu den ersten Signalkanälen 270₁ bis 270ₙ fluchtend angeordnet sind. So weist beispielsweise der zweite Signalkanal 280₁ die dritte Anschlusseinrichtung 230₁ und die vierte Anschlusseinrichtung 250₁ auf. Wie bereits erwähnt sind die dritten Anschlusseinrichtungen 230₁ bis 230ₙ dazu vorgesehen, elektrisch mit den zweiten Schnittstellen 220, bis 220ₙ der beiden ersten Trägerplatten 150 und 151 verbunden zu werden. An die vierten Anschlusseinrichtungen 250₁ bis 250ₙ kann wenigstens eine Steuerungseinrichtung an die Trägerplatte 160 angeschlossen werden. Angemerkt sei noch, dass sowohl die Signalkanäle 270₁ bis 270ₙ als auch die Signalkanäle 280₁ bis 280ₙ im Wesentlichen parallel, d. h. parallel zur x-Achse des in Figur 3 gezeigten Koordinatensystems nebeneinander verlaufen.

Wie Figur 3 zeigt, sind im montierten Zustand die zweiten Anschlusseinrichtungen 220₁ bis 220₈ der ersten Trägerplatte 150 mit den entsprechenden dritten Anschlusseinrichtungen, von denen lediglich in Figur 4 die Anschlusseinrichtung 230₁ dargestellt ist, verbunden, während die zweiten Anschlusseinrichtungen 220₉ bis 220ₙ der ersten Trägerplatte 151 mit den entsprechenden dritten Anschlusseinrichtungen auf der Trägerplatte 160 elektrisch verbunden sind.

Weiterhin ist zwischen der dritten und vierten Anschlusseinrichtung jedes zweiten Signalkanals 280₁ bis 280ₙ ein elektrischer Verbinder 290₁ bis 290ₙ angeordnet. So ist beispielsweise zwischen der dritten Anschlusseinrichtung 230₁ und der vierten Anschlusseinrichtung 250₁ des Signalkanals 280₁ der Verbinder 290₁ angeordnet. Die Verbinder 290, bis 290ₙ können jeweils als Stecker oder Buchsen realisiert und zum elektrischen und mechanischen Verbinden mit einem zweiten, komplementär ausgebildeten Verbinder einer Signalverarbeitungseinrichtung ausgebildet sein. Ein entsprechend komplementär ausgebildeten Verbinder 241 ist hinsichtlich einer Signalverarbeitungseinrichtung 240 in Figur 4 gezeigt.

Jeder zweite Signalkanal 280₁ bis 280ₙ kann einen ersten Signalleitungsabschnitt, der sich von der ersten Anschlusseinrichtung des jeweiligen Signalkanals zu einem ersten elektrischen Kontakt des jeweiligen Verbinders erstreckt, und wenigstens einen zweiten Signalleitungsabschnitt aufweisen, der sich von einem zweiten elektrischen Kontakt des jeweiligen elektrischen Verbinders mittelbar über eine Sicherungseinrichtung 260₁-260ₙ oder unmittelbar zur jeweiligen vierten Anschlusseinrichtung erstreckt. Bezugnehmend auf den zweiten Signalkanal 280₁ erstreckt sich dessen erster Signalleitungsabschnitt 281₁ von der dritten Anschlusseinrichtung 230₁ zum ersten elektrischen Kontakt 291₁ des elektrischen Verbinders 290₁, während der zweite elektrischen Kontakt 292₁ des elektrischen Verbinders 290₁ über einen Signalleitungsabschnitt 282₂, die Sicherungseinrichtung 260, und einen weiteren Signalleitungsabschnitt 283₁ mit der vierten Anschlusseinrichtung 250₁ verbunden ist. Die weiteren Signalkanäle 280₂ bis 280ₙ sind, wie in Figur 3 zu sehen, im Wesentlichen identisch zum Signalkanal 280₁ ausgebildet. Mit anderen Worten: Jeder elektrische Verbinder 290₁-290ₙ ist vorzugsweise über jeweils eine der manuell betätigbaren Sicherungseinrichtungen 260, bis 260ₙ mit der jeweiligen vierten Anschlusseinrichtung 250₁-250ₙ verbunden.

Figur 4 zeigt eine Querschnittsansicht der in Figur 3 gezeigten Schnittstellenanordnung 11 entlang der Signalkanäle 270₁ und 280₁, wobei die erste Trägerplatte 150 und die zweite Trägerplatte 160 im getrennten Zustand dargestellt sind.

Figur 4 zeigt im Querschnitt die Trägerplatte 150 mit der ersten Anschlusseinrichtung 190₁, die als Anschlusskontakt auf der Oberseite der Trägerplatte 150 angebracht ist. Ebenfalls dargestellt ist die zweite Anschlusseinrichtung 271₁, die beispielsweise an der Unterseite der Trägerplatte 150 angeordnet ist. Die Anschlusseinrichtung 190₁ ist über den Signalleitungsabschnitt 271₁ mit der Anschlusseinrichtung 220₁ verbunden, wobei der Signalleitungsabschnitt 271₁ vorzugsweise in der Trägerplatte 150 verläuft. In den Signalleitungsabschnitt 271₁ ist der elektrische Widerstand 210₁ über seine Anschlusskontakte 211₁ und 212₁ geschaltet, die wiederum elektrisch mit den Kontakten 181₁ und 182, der Schnittstelle 180_{1,} die an Oberseite der Trägerplatte 150 angeordnet ist, verbunden sein können.

Wie in Figur 4 weiter zu sehen, ist der Signalleitungsabschnitt 271₁ mit dem elektrischen Leiter der Überspannungs-Ableitungseinrichtung 200 verbunden, der wiederum mit dem Massenanschluss 201 verbunden ist. Der Massenanschluss 201 kann beispielsweise mit Erde oder einer Hutschiene elektrisch verbunden werden, um durch Überspannung verursachte Überströme ableiten zu können.

In Figur 4 ist ferner ein Überspannungsschutzmodul 170 dargestellt, welches als Steckmodul ausgebildet sein kann. Die Schnittstelle 180₁ ist vorzugsweise zur Aufnahme von Steckmodulen ausgebildet. Durch Überspannungen verursachte Ströme werden im Wesentlichen durch das Überspannungsschutzmodul 170 geführt, was durch die gestrichelte Linie im Überspannungsschutzmodul 170 angedeutet ist.

Weiterhin zeigt Figur 4 einen Querschnitt durch die zweite Trägerplatte 160, und zwar entlang des Signalkanals 280₁.

Auf der Oberseite der Trägerplatte 160 sind der dritte Anschlusseinrichtung 230₁ und vierte Anschlusseinrichtung 250₁ angeordnet. Der erste Signalleitungsabschnitt 281₁ verläuft vorzugsweise innerhalb der Trägerplatte 160 und verbindet die dritte Anschlusseinrichtung 230₁ mit dem Kontakt 291₁ des elektrischen Verbinders 290₁. Der zweite Signalleitungsabschnitt 282₁ verläuft vorzugsweise abschnittsweise innerhalb des Trägers 160 und abschnittsweise auf dem Träger 160 und verbindet den Kontakt 292₁ des elektrischen Verbinders 290₁ mit einem ersten Kontakt der manuell betätigbaren Sicherungseinrichtung 260₁. Der dritte Signalleitungsabschnitt 283₁ verläuft vorzugsweise abschnittsweise innerhalb des Trägers 160 und abschnittsweise auf dem Träger 160 und verbindet einen zweiten Kontakt der manuell betätigbaren Sicherungseinrichtung 260₁ mit der Anschlusseinrichtung 250₁.

Weiterhin zeigt Figur 4 die mit dem Verbinder 290₁ elektrisch und mechanisch verbundene Signalverarbeitungseinrichtung 240, die einen zum Verbinder 290₁ komplementären elektrischen Verbinder 241 aufweist. Gemäß einer vorteilhaften Ausgestaltung wird der Signalleitungsabschnitt 281₁ erst dann elektrisch mit dem Signalleitungsabschnitt 282₁ verbunden, wenn die Signalverarbeitungseinrichtung 240 mit dem an der Trägerplatte 160 montierten Verbinder 290₁ elektrisch verbunden ist. Dieser Zustand ist symbolisch durch die gestrichelte Linie 242 dargestellt. Mit anderen Worten: Erst im montierten Zustand können Feldsignale von einem an der Anschlusseinrichtung 190₁ angeschlossenen Feldgerät zur vierten Anschlusseinrichtung 250₁ gelangen, wobei in der Signalverarbeitungseinrichtung 240 eine vorgegebene Signalverarbeitung und/oder Signalumformung vorgenommen wird.

## Patentansprüche

1. Schnittstellenanordnung (10) zum Verbinden wenigstens einer Steuerungseinrichtung (20) mit mehreren Feldgeräten (30) aufweisend:
eine Trägerplatte (40) mit mehreren Signalkanälen (90₁-90ₙ), die jeweils eine erste Anschlusseinrichtung (50₁-50ₙ) und eine zweite Anschlusseinrichtung (60₁-60ₙ) aufweisen, wobei die ersten Anschlusseinrichtungen (50₁-50ₙ) jeweils zum Anschließen eines Feldgeräts (30) und die zweiten Anschlusseinrichtungen (60₁-60ₙ) zum Anschließen wenigstens einer Steuerungseinrichtung (20) ausgebildet sind, wobei
zwischen der ersten und zweiten Anschlusseinrichtung jedes Signalkanals (90₁-90ₙ) ein Verbinder (70₁-70ₙ) angeordnet ist, wobei die Verbinder (70₁-70ₙ) jeweils zum elektrischen und mechanischen Verbinden mit einem zweiten, komplementär ausgebildeten Verbinder (81) einer Signalverarbeitungseinrichtung (80) ausgebildet sind, wobei jeder Signalkanal (90₁-90ₙ) eine elektrische Schnittstelle (100₁-100ₙ) aufweist, die zum lösbaren Anschließen jeweils eines Überspannungsschutzmoduls (110) ausgebildet und an der Trägerplatte (40) zwischen dem jeweiligen Verbinder (70₁-70ₙ) und der jeweiligen ersten Anschlusseinrichtung (50₁-50ₙ) angeordnet ist, wobei jede Schnittstelle (100₁-100ₙ) mit einem elektrischen Widerstand (130₁-130ₙ) verbunden ist, und
eine mit den Schnittstellen (100₁-100ₙ) elektrisch verbundene Überspannungs-Ableitungseinrichtung (150), die zumindest teilweise an und/oder in der Trägerplatte (40) angeordnet und zum Ableiten auftretender Überspannungen und/oder Überströme ausgebildet ist.

2. Schnittstellenanordnung nach Anspruch 1,
**dadurch gekennzeichnet, dass**
die Signalkanäle (90₁-90ₙ) parallel zueinander angeordnet sind, dass jeder Signalkanal (90₁-90ₙ) wenigstens einen ersten Signalleitungsabschnitt ((91₁-91ₙ) aufweist, der die erste Anschlusseinrichtung (50₁-50ₙ) des jeweiligen Signalkanals (90₁-90ₙ) mit dem jeweiligen Verbinder (70₁-70ₙ) elektrisch verbindet und in den der elektrische Widerstand (130₁-130ₙ) des jeweiligen Signalkanals geschaltet ist, dass
jeder Signalkanal (90₁-90ₙ) wenigstens einen zweiten Signalleitungsabschnitt ((92₁-92ₙ, 93₁-93ₙ) aufweist, der die zweite Anschlusseinrichtung (60₁-60ₙ) des jeweiligen Signalkanals (90₁-90ₙ) mittelbar oder unmittelbar mit dem jeweiligen Verbinder (70₁-70ₙ) elektrisch verbindet, dass
die ersten Verbinder (70₁-70ₙ) nebeneinander an der Trägerplatte (40) angeordnet sind, und dass
die Überspannungs-Ableitungseinrichtung (140) einen elektrischen Leiter aufweist, der rechtwinklig zu den ersten Signalleitungsabschnitten (91₁-91ₙ) verläuft.

3. Schnittstellenanordnung nach Anspruch 2,
**dadurch gekennzeichnet, dass**
an der Trägerplatte (40) ein Masseanschluss (145) angeordnet ist, der mit dem elektrischen Leiter (150) verbunden ist.

4. Schnittstellenanordnung (11) zum Verbinden wenigstens einer Steuerungseinrichtung mit mehreren Feldgeräten aufweisend:
wenigstens eine erste Trägerplatte (150) mit mehreren ersten Signalkanälen (270₁-270₈), die jeweils eine erste Anschlusseinrichtung (190₁-190₈) und eine zweite Anschlusseinrichtung (220₁-220₈) aufweisen, wobei die ersten Anschlusseinrichtungen (190₁-190₈) jeweils zum Anschließen eines Feldgeräts und die zweiten Anschlusseinrichtungen (270₁-270₈) zum elektrischen Verbinden mit dritten Anschlusseinrichtungen (230₁) einer zweiten Trägerplatte (160) ausgebildet sind, wobei
jeder erste Signalkanal (270₁-270₈) eine elektrische Schnittstelle (180₁-180₈) aufweist, die zum Anschließen jeweils eines Überspannungsschutzmoduls ((170) ausgebildet und zwischen der ersten und zweiten Anschlusseinrichtung (190₁-190₈; 220₁-220₈) des jeweiligen Signalkanals (270₁-270₈) angeordnet ist, wobei jede Schnittstelle (180₁-180₈) mit einem elektrischen Widerstand (210₁-210₈) verbunden ist, und
eine mit den Schnittstellen (180₁-180₈) elektrisch verbundene Überspannungs-Ableitungseinrichtung (200), die zumindest teilweise an und/oder in der wenigstens einen ersten Trägerplatte (150) angeordnet und zum Ableiten auftretender Überspannungen und/oder Überströme ausgebildet ist, eine zweite Trägerplatte (160) mit mehreren zweiten Signalkanälen (280₁-280ₙ), die jeweils eine dritte Anschlusseinrichtung (230₁) und eine vierte Anschlusseinrichtung (250₁-250ₙ) aufweisen, wobei die vierten Anschlusseinrichtungen (250₁-250ₙ) zum Anschließen wenigstens einer Steuerungseinrichtung und zumindest einige der dritten Anschlusseinrichtungen (230₁) zum elektrischen Verbinden mit den zweiten Anschlusseinrichtungen (220₁-220ₙ) der wenigstens einen ersten Trägerplatte (150) ausgebildet sind, wobei, wenn die wenigstens eine erste Trägerplatte (150) und die zweite Trägerplatte (160) miteinander gekoppelt sind, eine elektrische Verbindung zwischen den zweiten Anschlusseinrichtung (220₁-220ₙ) und den jeweiligen dritten Anschlusseinrichtungen (230₁) besteht, wobei
zwischen der dritten und vierten Anschlusseinrichtung (230₁, 250₁-250ₙ) jedes zweiten Signalkanals (280₁-280ₙ) ein Verbinder (290₁-290ₙ) angeordnet ist, wobei die Verbinder (290₁-290ₙ) jeweils zum elektrischen und mechanischen Verbinden mit einem zweiten, komplementär ausgebildeten Verbinder (241) einer Signalverarbeitungseinrichtung (240) ausgebildet sind.

5. Schnittstellenanordnung (11) nach Anspruch 4,
**dadurch gekennzeichnet, dass**
die ersten Signalkanäle (270₁-270₈) der wenigstens einen ersten Trägerplatte (150) parallel zueinander angeordnet sind, dass
jeder erste Signalkanal (270₁-270₈) wenigstens einen ersten Signalleitungsabschnitt(271,-271s) aufweist, der sich von der ersten Anschlusseinrichtung (190₁-190₈) des jeweiligen ersten Signalkanals (270₁-270ₙ) zur zweiten Anschlusseinrichtung (220₁-220₈) erstreckt und in den der elektrische Widerstand (210₁-210₈) des jeweiligen Signalkanals (270₁-270ₙ) geschaltet ist, und dass
die Überspannungs-Ableitungseinrichtung (200) einen elektrischen Leiter aufweist, der rechtwinklig zu den ersten Signalleitungsabschnitten (271₁-271₈) verläuft.

6. Schnittstellenanordnung (11) nach Anspruch 5,
**dadurch gekennzeichnet, dass**
an der wenigstens einen ersten Trägerplatte (150) ein Masseanschluss (201) angeordnet ist, der mit dem elektrischen Leiter (200) verbunden ist.

7. Schnittstellenanordnung (11) nach einem der Ansprüche 4 bis 6,
**gekennzeichnet durch**
eine weitere erste Trägerplatte (151) mit mehreren dritten Signalkanälen (270₉-270ₙ), die jeweils eine fünfte Anschlusseinrichtung (190₉-190ₙ) und eine sechste Anschlusseinrichtung (220₉-220ₙ) aufweisen, wobei die fünften Anschlusseinrichtungen (190₉-190ₙ) jeweils zum Anschließen eines Feldgeräts und die sechsten Anschlusseinrichtungen (220₉-220ₙ) zum elektrischen Verbinden mit den verbleibenden dritten Anschlusseinrichtungen (230₁) der zweiten Trägerplatte (160) ausgebildet sind, wobei
jeder dritte Signalkanal (270₉-270ₙ) eine elektrische Schnittstelle (180₉-180ₙ) aufweist, die zum Anschließen jeweils eines Überspannungsschutzmoduls ausgebildet und zwischen der fünften und sechsten Anschlusseinrichtung (190₉-190ₙ, 220₉-220ₙ) des jeweiligen dritten Signalkanals (180₉-180ₙ) angeordnet ist, wobei jede Schnittstelle (180₉-180ₙ) mit einem elektrischen Widerstand (210₉-210ₙ) verbunden ist, und
eine mit den Schnittstellen (180₉-180ₙ) elektrisch verbundene Überspannungs-Ableitungseinrichtung (202), die zumindest teilweise an und/oder in der weiteren ersten Trägerplatte (151) angeordnet und zum Ableiten auftretender Überspannungen und/oder Überströme ausgebildet ist.

8. Schnittstellenanordnung (11) nach einem der Ansprüche 4 bis 7,
**dadurch gekennzeichnet, dass**
die zweiten Signalkanäle (280₁-280ₙ) parallel zueinander angeordnet sind, dass jeder zweite Signalkanal (280₁-280ₙ) wenigstens einen ersten Signalleitungsabschnitt (281₁-281ₙ) aufweist, der die dritte Anschlusseinrichtung (230₁) des jeweiligen zweiten Signalkanals (280₁-280ₙ) mit dem jeweiligen Verbinder (290₁-290ₙ) elektrisch verbindet, dass
jeder zweite Signalkanal (280₁-280ₙ) wenigstens einen zweiten Signalleitungsabschnitt (282₁-282ₙ, 283₁-283ₙ) aufweist, der die vierte Anschlusseinrichtung (250₁-250ₙ) des jeweiligen zweiten Signalkanals (280₁-280ₙ) mittelbar oder unmittelbar mit dem jeweiligen Verbinder (290₁-290ₙ) elektrisch verbindet, dass
die Verbinder (290₁-290ₙ) nebeneinander an der Trägerplatte (160) angeordnet sind.

9. Schnittstellenanordnung nach einem der vorstehenden Ansprüche,
**dadurch gekennzeichnete, dass**
die Schnittstellenanordnung (10; 11) als Umverdrahtungs- und/oder Signalumwandlungseinrichtung ausgebildet ist.

10. Schnittstellenanordnung nach einem der vorstehenden Ansprüche,
**dadurch gekennzeichnet, dass**
die Schnittstellenanordnung (10; 11) zur Montage an einer Tragschiene ausgebildet ist.

11. Schnittstellenanordnung nach einem der vorstehenden Ansprüche,
**dadurch gekennzeichnet, dass**
die Schnittstellen (100₁-100ₙ; 180₁-180ₙ) zur Aufnahme von als Steckmodule ausgebildete Überspannungsschutzmodule ausgebildet sind.

## Claims

1. An interface arrangement (10) for connecting at least one control device (20) to a plurality of field devices (30), comprising:
a carrier plate (40) with a plurality of signal channels (90₁-90ₙ), each having a first terminal device (50₁-50ₙ) and a second terminal device (60₁-60ₙ), the first terminal devices (50₁-50ₙ) each being designed for connecting a field device (30) and the second terminal devices (60₁-60ₙ) being designed for connecting at least one control device (20), wherein a connector (70₁-70ₙ) is arranged between the first and second terminal device of each signal channel (90₁-90ₙ), the connectors (70₁-70ₙ) each being designed for electrical and mechanical connection to a second, complementarily designed connector (81) of a signal processing device (80), each signal channel (90₁-90ₙ) having an electrical interface (100₁-100ₙ), which is designed for the detachable connection of a respective overvoltage protection module (110) and is arranged on the carrier plate (40) between the respective connector (70₁-70ₙ) and the respective first terminal device (50₁-50ₙ), each interface (100₁-100ₙ) being connected to an electrical resistor (130₁-130ₙ), and
an overvoltage discharge device (150) which is electrically connected to the interfaces (100₁-100ₙ), being arranged at least partially on and/or in the carrier plate (40) and designed for discharging occurring overvoltages and/or overcurrents.

2. The interface arrangement according to claim 1,
**characterized in that**
the signal channels (90₁-90ₙ) are arranged parallel to one another, **in that** each signal channel (90₁-90ₙ) has at least one first signal line section ((91₁-91ₙ) which electrically connects the first terminal device (50₁-50ₙ) of the respective signal channel (90₁-90ₙ) to the respective connector (70₁-70ₙ) and into which the electrical resistor (130₁-130ₙ) of the respective signal channel is connected, **in that**
each signal channel (90₁-90ₙ) has at least one second signal line section (92₁-92ₙ, 93₁-93ₙ) which electrically connects the second terminal device (60₁-60ₙ) of the respective signal channel (90₁-90ₙ) indirectly or directly to the respective connector (70₁-70ₙ), **in that** the first connectors (70₁-70ₙ) are arranged next to one another on the carrier plate (40), and **in that**
the overvoltage discharge device (140) has an electrical conductor which runs at right angles to the first signal line sections (91₁-91ₙ).

3. The interface arrangement according to claim 2,
**characterized in that**
a ground terminal (145) is arranged on the carrier plate (40), which is connected to the electrical conductor (150).

4. An interface arrangement (11) for connecting at least one control device to a plurality of field devices, comprising:
at least one first carrier plate (150) having a plurality of first signal channels (270₁-270₈), each having a first terminal device (190₁-190₈) and a second terminal device (220₁-220₈), the first terminal devices (190₁-190₈) each being designed for connecting a field device and the second terminal devices (270₁-270₈) being designed for electrical connection to third terminal devices (230₁) of a second carrier plate (160), wherein
each first signal channel (270₁-270₈) has an electrical interface (180₁-180₈) which is designed for connecting a respective overvoltage protection module ((170) and is arranged between the first and second terminal devices (190₁-190₈; 220₁-220₈) of the respective signal channel (270₁-270₈), each interface (180₁-180₈) being connected to an electrical resistor (210₁-210₈), and
an overvoltage discharge device (200) which is electrically connected to the interfaces (180₁-180₈), being arranged at least partially on and/or in the at least one first carrier plate (150) and is designed to discharge overvoltages and/or overcurrents which occur,
a second carrier plate (160) having a plurality of second signal channels (280₁-280ₙ), each having a third terminal device (230₁) and a fourth terminal device (250₁-250ₙ), the fourth terminal devices (250₁-250ₙ) being designed for connecting at least one control device and at least some of the third terminal devices (230₁) being designed for electrical connection to the second terminal devices (220₁-220ₙ) of the at least one first carrier plate (150), wherein, when the at least one first carrier plate (150) and the second carrier plate (160) are coupled to each other, an electrical connection exists between the second terminal devices (220₁-220ₙ) and the respective third terminal devices (230₁), wherein
a connector (290₁-290ₙ) is arranged between the third and fourth terminal devices (230₁, 250₁-250ₙ) of each second signal channel (280₁-280ₙ), the connectors (290₁-290ₙ) each being designed for electrical and mechanical connection to a second,
complementarily designed connector (241) of a signal processing device (240).

5. The interface arrangement (11) according to claim 4,
**characterized in that**
the first signal channels (270₁-270₈) of the at least one first carrier plate (150) are arranged parallel to one another, **in that**
each first signal channel (270₁-270₈) has at least one first signal line section (271₁-271₈) which extends from the first terminal device (190₁-190₈) of the respective first signal channel (270₁-270ₙ) to the second terminal device (220₁-220₈) and into which the electrical resistor (210₁-210₈) of the respective signal channel (270₁-270ₙ) is connected, and **in that**
the overvoltage discharge device (200) has an electrical conductor which runs at right angles to the first signal line sections (271₁-271₈).

6. The interface arrangement (11) according to claim 5,
**characterized in that**
a ground terminal (201), which is connected to the electrical conductor (200), is arranged on the at least one first carrier plate (150).

7. The interface arrangement (11) according to one of claims 4 to 6, **characterized by** a further first carrier plate (151) having a plurality of third signal channels (270₉-270ₙ), which each have a fifth terminal device (190₉-190ₙ) and a sixth terminal device (220₉-220ₙ), the fifth terminal devices (190₉-190ₙ) each being designed for connecting a field device and the sixth terminal devices (220₉-220ₙ) being designed for electrical connection to the remaining third terminal devices (230₁) of the second carrier plate (160), wherein each third signal channel (270₉-270ₙ) has an electrical interface (180₉-180ₙ) which is designed for connecting a respective overvoltage protection module and is arranged between the fifth and sixth terminal devices (190₉-190ₙ, 220₉-220ₙ) of the respective third signal channel (180₉-180ₙ), each interface (180₉-180ₙ) being connected to an electrical resistor (210₉-210ₙ), and
an overvoltage discharge device (202) which is electrically connected to the interfaces (180₉-180ₙ), being arranged at least partially on and/or in the further first carrier plate (151) and is designed to discharge overvoltages and/or overcurrents which occur.

8. The interface arrangement (11) according to one of claims 4 to 7,
**characterized in that**
the second signal channels (280₁-280ₙ) are arranged parallel to each other, **in that** each second signal channel (280₁-280ₙ) comprises at least one first signal line section (281₁-281ₙ) which electrically connects the third terminal device (230₁) of the respective second signal channel (280₁-280ₙ) to the respective connector (290₁-290ₙ), **in that** each second signal channel (280₁-280ₙ) has at least one second signal line section (282₁-282ₙ, 283₁-283ₙ) which electrically connects the fourth connecting device (250₁-250ₙ) of the respective second signal channel (280₁-280ₙ) indirectly or directly to the respective connector (290₁-290ₙ), **in that**
the connectors (290₁-290ₙ) are arranged next to one another on the carrier plate (160).

9. The interface arrangement according to one of the preceding claims,
**characterized in that**
the interface arrangement (10; 11) is designed as a rewiring and/or signal conversion device.

10. The interface arrangement according to one of the preceding claims,
**characterized in that**
the interface arrangement (10; 11) is designed for mounting on a mounting rail.

11. The interface arrangement according to one of the preceding claims,
**characterized in that**
the interfaces (100₁-100ₙ; 180₁-180ₙ) are designed to accommodate overvoltage protection modules designed as plug-in modules.

## Revendications

1. Ensemble d'interfaces (10) destiné à connecter au moins un dispositif de commande (20) à plusieurs appareils de terrain (30), présentant :
une carte de support (40) avec plusieurs canaux de signal (90₁-90ₙ), qui présentent respectivement un premier dispositif de raccordement (50₁-50ₙ) et un deuxième dispositif de raccordement (60₁-60ₙ), dans lequel les premiers dispositifs de raccordement (50₁-50ₙ) sont réalisés respectivement pour raccorder un appareil de terrain (30) et les deuxièmes dispositifs de raccordement (60₁-60ₙ) sont réalisés pour raccorder au moins un dispositif de commande (20), dans lequel
un connecteur (70₁-70ₙ) est disposé entre le premier et le deuxième dispositif de raccordement de chaque canal de signal (90₁-90ₙ), dans lequel les connecteurs (70₁-70ₙ) sont réalisés respectivement pour être connectés électriquement et mécaniquement à un deuxième connecteur (81), réalisé de manière complémentaire, d'un dispositif de traitement de signaux (80), dans lequel chaque canal de signal (90₁-90ₙ) présente une interface électrique (100₁-100ₙ), qui est réalisée pour raccorder de manière amovible respectivement un module de protection contre les surtensions (110) et est disposée sur la carte de support (40) entre le connecteur (70₁-70ₙ) respectif et le premier dispositif de raccordement (50₁-50ₙ) respectif, dans lequel chaque interface (100₁-100ₙ) est connectée à une résistance électrique (130₁-130ₙ), et
un dispositif de déviation de surtensions (150) connecté électriquement aux interfaces (100₁-100ₙ), qui est disposé au moins en partie sur et/ou dans la carte de support (40) et est réalisé pour dévier des surtensions et/ou des surintensités se formant.

2. Ensemble d'interfaces selon la revendication 1,
**caractérisé en ce que**
les canaux de signal (90₁-90ₙ) sont disposés de manière parallèle les uns par rapport aux autres, que chaque canal de signal (90₁-90ₙ) présente au moins une première section de ligne de signal (91₁-91ₙ), qui connecte électriquement le premier dispositif de raccordement (50₁-50ₙ) du canal de signal (90₁-90ₙ) respectif au connecteur (70₁-70ₙ) respectif et dans laquelle la résistance électrique (130₁-130ₙ) du canal de signal respectif est branchée, que
chaque canal de signal (90₁-90ₙ) présente au moins une deuxième section de ligne de signal (92₁-92ₙ, 93₁-93ₙ), qui connecte électriquement indirectement ou directement au connecteur (70₁-70ₙ) respectif le deuxième dispositif de raccordement (60₁-60ₙ) du canal de signal (90₁-90ₙ) respectif, que
les premiers connecteurs (70₁-70ₙ) sont disposés côte à côte sur la carte de support (40), et que
le dispositif de déviation de surtensions (140) présente un conducteur électrique, qui s'étend à angle droit par rapport aux premières sections de ligne de signal (91₁-91ₙ).

3. Ensemble d'interfaces selon la revendication 2,
**caractérisé en ce que**
est disposée sur la carte de support (40) une borne de masse (145), qui est connectée au conducteur électrique (150).

4. Ensemble d'interfaces (11) destiné à connecter au moins un dispositif de commande à plusieurs appareils de terrain, présentant :
au moins une première carte de support (150) avec plusieurs premiers canaux de signal (270₁-270₈), qui présentent respectivement un premier dispositif de raccordement (190₁-190₈) et un deuxième dispositif de raccordement (220₁-220₈) , dans lequel les premiers dispositifs de raccordement (190₁-190₈) sont réalisés respectivement pour raccorder un appareil de terrain et les deuxièmes dispositifs de raccordement (270₁-270₈) sont
réalisés pour être connectés électriquement à des troisièmes dispositifs de raccordement (230₁) d'une deuxième carte de support (160), dans lequel
chaque premier canal de signal (270₁-270₈) présente une interface électrique (180₁-180₈), qui est réalisée pour raccorder respectivement un module de protection contre les surtensions (170) et est disposée entre le premier et le deuxième dispositif de raccordement (190₁-190₈ ; 220₁-220₈) du canal de signal (270₁-270₈) respectif, dans lequel chaque interface (180₁-180₈) est connectée à une résistance électrique (210₁-210₈), et
un dispositif de déviation de surtensions (200) connecté électriquement aux interfaces (180₁-180₈), qui est disposé au moins en partie sur et/ou dans l'au moins une première carte de support (150) et est réalisé pour dévier des surtensions et/ou des surintensités se formant,
une deuxième carte de support (160) avec plusieurs deuxièmes canaux de signal (280₁-280ₙ), qui présentent respectivement un troisième dispositif de raccordement (230₁) et un quatrième dispositif de raccordement (250₁-250ₙ), dans lequel les quatrièmes dispositifs de raccordement (250₁-250ₙ) sont réalisés pour raccorder au moins un dispositif de commande et au moins certains des troisièmes dispositifs de raccordement (230₁) sont réalisés pour être connectés électriquement aux deuxièmes dispositifs de raccordement (220₁-220ₙ) de l'au moins une première carte de support (150), dans lequel, lorsque l'au moins une première carte de support (150) et la deuxième carte de support (160) sont couplées l'une à l'autre, il existe une connexion électrique entre le deuxième dispositif de raccordement (220₁-220ₙ) et les troisièmes dispositifs de raccordement (230₁) respectifs, dans lequel
un connecteur (290₁-290ₙ) est disposé entre le troisième et le quatrième dispositif de raccordement (230₁, 250₁-250ₙ) de chaque deuxième canal de signal (280₁-280ₙ), dans lequel les connecteurs (290₁-290ₙ) sont réalisés respectivement pour être connectés électriquement et mécaniquement à un deuxième connecteur (241), réalisé de manière complémentaire, d'un dispositif de traitement de signaux (240).

5. Ensemble d'interfaces (11) selon la revendication 4,
**caractérisé en ce que**
les premiers canaux de signal (270₁-270₈) de l'au moins une première carte de support (150) sont disposés de manière parallèle les uns par rapport aux autres, que
chaque premier canal de signal (270₁-270₈) présente au moins une première section de ligne de signal (271₁-271₈), qui s'étend depuis le premier dispositif de raccordement (190₁-190₈) du premier canal de signal (270₁-270ₙ) respectif au deuxième dispositif de raccordement (220₁-220₈) et dans laquelle la résistance électrique (210₁-210₈) du canal de signal (270₁-270ₙ) respectif est branchée, et que
le dispositif de dérivation de surtensions (200) présente un conducteur électrique, qui s'étend à angle droit par rapport aux premières sections de lignes de signal (271₁-271₈).

6. Ensemble d'interfaces (11) selon la revendication 5,
**caractérisé en ce que**
une borne de masse (201) est disposée sur l'au moins une première carte de support (150), laquelle est connectée au conducteur électrique (200).

7. Ensemble d'interfaces (11) selon l'une quelconque des revendications 4 à 6,
**caractérisé par**
une autre première carte de support (151) avec plusieurs troisièmes canaux de signal (270₉-270ₙ), qui présentent respectivement un cinquième dispositif de raccordement (190₉-190ₙ) et un sixième dispositif de raccordement (220₉-220ₙ), dans lequel les cinquièmes dispositifs de raccordement (190₉-190ₙ) sont réalisés respectivement pour raccorder un appareil de terrain et les sixièmes dispositifs de
raccordement (220₉-220ₙ) sont réalisés pour être connectés électriquement aux troisièmes dispositifs de raccordement (230₁) restants de la deuxième carte de support (160), dans lequel
chaque troisième canal de signal (270₉-270ₙ) présente une interface électrique (180₉-180ₙ), qui est réalisée pour raccorder respectivement un module de protection contre les surtensions et est disposée entre le cinquième et le sixième dispositif de raccordement (190₉-190ₙ, 220₉-220ₙ) du troisième canal de signal (180₉-180ₙ) respectif, dans lequel chaque interface (180₉-180ₙ) est reliée à la résistance électrique (210₉-210ₙ), et
un dispositif de dérivation de surtensions (202) connecté électriquement aux interfaces (180₉-180ₙ), qui est disposé au moins en partie sur et/ou dans l'autre première carte de support (151) et est réalisé pour dévier des surtensions et/ou des surintensités se formant.

8. Ensemble d'interfaces (11) selon l'une quelconque des revendications 4 à 7,
**caractérisé en ce que**
les deuxièmes canaux de signal (280₁-280ₙ) sont disposés de manière parallèle les uns par rapport aux autres, que
chaque deuxième canal de signal (280₁-280ₙ) présente au moins une première section de ligne de signal (281₁-281ₙ), qui connecte électriquement le troisième dispositif de raccordement (230₁) du deuxième canal de signal (280₁-280ₙ) respectif au connecteur (290₁-290ₙ) respectif, que
chaque deuxième canal de signal (280₁-280ₙ) présente au moins une deuxième section de ligne de signal (282₁-282ₙ, 283₁-283ₙ), qui connecte électriquement le quatrième dispositif de raccordement (250₁-250ₙ) du deuxième canal de signal (280₁-280ₙ) respectif indirectement ou directement au connecteur (290₁-290ₙ) respectif, que
les connecteurs (290₁-290ₙ) sont disposés côte à côte sur la carte de support (160).

9. Ensemble d'interfaces selon l'une quelconque des revendications précédentes,
**caractérisé en ce que**
l'ensemble d'interfaces (10 ; 11) est réalisé en tant que dispositif de câblage et/ou de conversion de signaux.

10. Ensemble d'interfaces selon l'une quelconque des revendications précédentes,
**caractérisé en ce que**
l'ensemble d'interfaces (10 ; 11) est réalisé pour être monté sur un rail de support.

11. Ensemble d'interfaces selon l'une quelconque des revendications précédentes,
**caractérisé en ce que**
les interfaces (100₁-100ₙ ; 180₁-180ₙ) sont réalisées pour recevoir des modules de protection contre les surtensions réalisés en tant que modules enfichables.
